# EUROPEAN PATENT SPECIFICATION

(11) **EP 1 498 340 B1**
(45) Date of publication and mention of the grant of the patent: **01.04.2009**
(21) Application number: 03746405.4
(22) Date of filing: 19.02.2003
(51) Int. Cl.: B62D 1/16, B62D 1/184, B62D 1/19, F16B 17/00, B21D 39/04

(54) **METHOD OF ASSEMBLING STEERING COLUMNS**
VERFAHREN ZUR MONTAGE VON LENKSÄULEN
PROCEDE DE MONTAGE DE COLONNES DE DIRECTION

(30) Priority: 17.04.2002 JP 2002114121
(43) Date of publication of application: 19.01.2005
(73) Proprietor: NSK LTD., Shinagawa-ku, Tokyo 141-8560 (JP)
(72) Inventor: HIGASHINO, Kiyoharu c/o NSK Ltd., Maebashi-shi, Gunma 371-0853 (JP); KOIKE, Tetsuya, c/o NSK Ltd., Maebashi-shi, Gunma 371-0853 (JP)
(74) Representative: Cross, James Peter Archibald
(86) International application number: PCT/JP2003/001782
(87) International publication number: WO 2003/086835

(56) References cited:
- EP-A- 0 179 690
- EP-A- 0 634 313
- EP-A- 0 755 842
- EP-A- 0 823 296
- EP-A- 0 845 402
- GB-A- 2 350 666
- JP-A- 8 067 257
- JP-A- 8 268 296
- JP-A- 8 276 852
- JP-A- 2000 211 534
- PATENT ABSTRACTS OF JAPAN vol. 2000, no. 11, 3 January 2001 (2001-01-03) -& JP 2000 211534 A (NSK LTD), 2 August 2000 (2000-08-02)
- PATENT ABSTRACTS OF JAPAN vol. 1997, no. 02, 28 February 1997 (1997-02-28) -& JP 08 276852 A (NIPPON SEIKO KK), 22 October 1996 (1996-10-22)
- PATENT ABSTRACTS OF JAPAN vol. 1996, no. 07, 31 July 1996 (1996-07-31) -& JP 08 067257 A (TOYOTA MOTOR CORP), 12 March 1996 (1996-03-12)

## Description

### TECHNICAL FIELD

The present invention relates to steering columns for vehicle, and in particular to a method of assembling a steering column. According to an embodiment, a bracket is fixed to a column jacket by crimping joint projections which are integrally formed with the bracket main body.

### BACKGROUND ART

Brackets such as column brackets, tilt brackets and the like are provided on steering columns for a vehicle. Fusion welding whereby a large joint strength can be obtained, is used for fixing such brackets to the column jacket, except for a part of the brackets. The usage of welded brackets greatly contributes to lightening of the steering column, simplifying the processes, and decreasing the manufacturing cost. Having such advantages, on the other hand however, the usage of the weld brackets is also accompanied with disadvantages such as the deformation of the column jacket due to the heating at the time of welding, or the generation of greenhouse effect gas such as carbon dioxide due to the welding fumes.

Incidentally, regarding the steering column, there has been an attempt to replace the weld brackets by non-weld brackets. The non-weld brackets include for example, brackets fixed using fasteners such as a rivet or pin, and brackets fixed by press fitting without fasteners therebetween.

However, when fixing the brackets using fasteners such as a rivet or pin, punches for piercing the fasteners are required for the column jacket and the brackets, which increases the number of steps and the number of components, causing an increase in the manufacturing cost. On the other hand, when fixing the brackets by press fitting, although it is possible to avoid the increase in the number of components or the like, it is difficult to keep the dimension of the inner diameter of the bracket within the determined tolerance to obtain the proper interference, and the accuracy is not easily controlled.

GB 2, 350, 666 A discloses a clamping device for a steering column having first and second brackets, fixable to a vehicle and steering column respectively, each having spaced arms with elongate apertures.

JP 2000 21 15 34 A discloses a tilt type steering device and a method of assembling steering columns, comprising the steps of forming a cylindrical column jacket; a bracket with corresponding matching surfaces; temporary fitting the bracket along the surface of said column jacket; and crimping the bracket into the surface of said column.

JP 0 827 68 52 A discloses a tilt steering device in which a lower part of a steering column is swollen by a plastic process.

EP 0 845 402 A discloses a method of crimping a column jacket to a bracket.

An object of the present invention is to seek to provide a method of assembling steering columns which enables the brackets to be securely fixed to the column jacket using simple joint components only.

### DISCLOSURE OF THE INVENTION

According to an aspect of the present invention, there is provided a method according to claim 1.

Preferable features according to this aspect are set out in claims 2 to 5.

According to embodiments of the present invention, since the bracket with the joint projections integral with the main body is fixed by crimping, the number of steps and the number of components may potentially not be increased, as is the case of fitting using fasteners, and the manufacturing cost may potentially be kept from increasing.

Moreover, according to embodiments it may potentially not be necessary to strictly control the accuracy of the dimension of the inner diameter of the bracket, as is the case of fixing by press fitting, so that the bracket may potentially be manufactured at low cost.

Furthermore, since the bracket is not jointed by welding, the column jacket may potentially be prevented from becoming deformed and the quality may potentially be kept stable. On the other hand, welding fumes are not generated, so there can be no generation of greenhouse effect gas created by welding such as carbon dioxide.

### BRIEF DESCRIPTION OF THE DRAWINGS

In order that the present invention may be more readily understood, an embodiment thereof will now be described, by way of example only, with reference to the accompanying drawings, of which:
FIG. 1 is a cross-sectional view showing a steering column comprising an exemplary distance bracket which is not according to the present invention, but which is given by way of background to the present invention.
FIG. 2 is a schematic diagram showing a step for forming a column jacket and an upper bracket, a step for temporary fitting the distance bracket to the column jacket, and a step for crimping projections, according to a method which is not according to the present invention, but which is given by way of background to the present invention.
FIG. 3 is a front view showing a steering column comprising an upper bracket, which is assembled by a method according to an embodiment of the present invention.
FIG. 4 is a schematic diagram showing a step for forming a column jacket and an upper bracket, according to a method according to an embodiment of the present invention.
FIG. 5 is a schematic diagram showing a step for temporary fitting the upper bracket to the column jacket, and a step for crimping projections, according to a method according to an embodiment of the present invention.
FIG. 6 is a schematic diagram showing a step for crimping projections of a lower bracket according to a method which is not according to the present invention, but which is given by way of background to the present invention.
FIG. 7 is a schematic diagram showing a step for crimping projections of a bracket according to a method which is not according to the present invention, but which is given by way of background to the present invention.

### BEST MODE FOR CARRYING OUT THE INVENTION

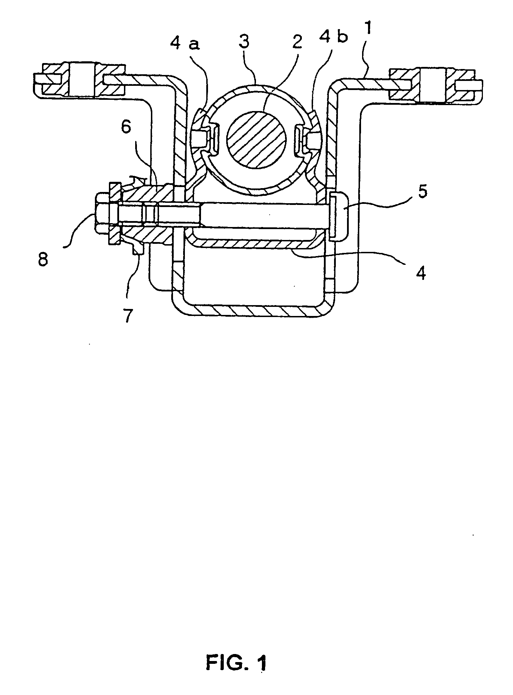

The present example of Fig. 1, which is not according to the present invention, but which is given by way of background to the present invention, is an application example for a distance bracket which is used together with a tilt bracket. In FIG. 1, a tilt bracket 1 fixed to a body member (not shown) is a member which supports a column jacket 3 containing a steering shaft 2. A distance bracket 4 is mounted in the center of the tilt bracket 1. The column jacket 3 is held between a pair of joint projections 4a and 4b of the distance bracket 4. A tilt bolt 5 being a fastening member, is provided through the tilt bracket 1 and the distance bracket 4. A nut 6 is screwed to a thread part at the tip of the tilt bolt 5.

On the other hand, a tilt lever 7 for fastening the fastening member, is engaged with the nut 6. The tilt lever 7 comprises a bolt 8 for fixing a part thereof to the nut 6.

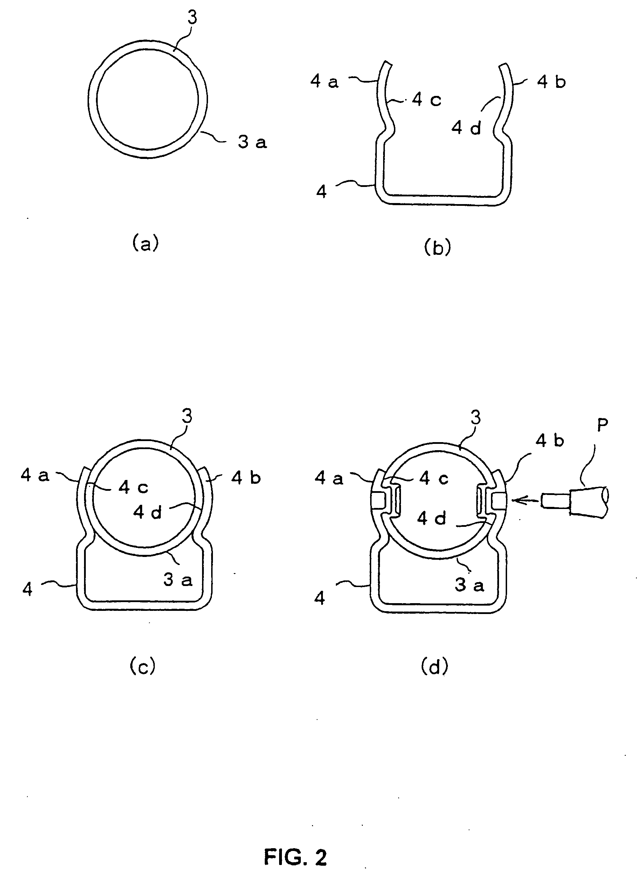

Hereunder is a description of a method of assembling the steering column of Fig. 1, which is not according to the present invention, but which is given by way of background to the present invention, based on the schematic diagram shown in FIG. 2. An electric resistance welded mild steel tube or a drawn tube is cut in a predetermined length to form a cylindrical column jacket 3 comprising a circular outer surface 3a shown in FIG. 2(a).

As shown in FIG. 2(b), a mild steel plate is prepared and press processed into the distance _ bracket 4 comprising the pair of joint projections 4a and 4b. The pair of projections 4a and 4b are symmetrically formed with respect to the center of the distance bracket extending in the same direction. Inner surfaces 4c and 4d of the projections 4a and 4b are formed in a circular arc shape conforming to the outer surface 3a of the column jacket 3.

As shown in FIG. 2(c), the distance bracket 4 having the projections 4a and 4b is fitted to the column jacket 3 which was previously processed. In the present step, the inner surfaces 4c and 4d of the projections 4a and 4b are fitted along the outer surface 3a of the column jacket 3. After assembling, they are temporary fixed using a suitable clip so that the position of both members does not change accidentally. The arrangement may be such that the distance bracket 4 is temporary fixed to the column jacket 3 by the spring back generated between the projections 4a and 4b.

As shown in FIG. 2(d), while supporting the inner surface of the column jacket 3 by a die (not shown), the outer surfaces of the projections 4a and 4b of the distance bracket 4 are crimped by applying a punch P. In the present step, these are crimped with the punch P which is pressed toward the center of the column jacket 3 so as not to deform the circular cross-section column jacket 3. By the above procedure, the steering column having the distance bracket 4 mounted thereon (refer to FIG. 1) is obtained.

In the present example, since the bracket with the , joint projections integral with the main body is fixed by crimping, the number of steps and the number of components are not increased, as is the case of fitting using fasteners, and the manufacturing cost may potentially be kept from increasing.

Moreover, it is potentially not necessary to strictly control the accuracy of the dimension of the inner diameter of the bracket, as is the case of fixing by press fitting, so that the bracket may potentially be manufactured at low cost.

Furthermore, since the bracket is not jointed by welding, the column jacket may potentially not be deformed and the quality may potentially be kept stable. On the other hand, welding fumes are not generated, so there can be no generation of greenhouse effect gas such as carbon dioxide.

In the above example, it was explained that the cylindrical column jacket 3 was formed from a mild steel tube. However, the cylindrical column jacket may be formed from an Al-Mn alloy tube instead of a mild steel tube. Similarly to the above example, the joint projections are formed on the mild steel distance bracket and the projections are crimped into the Al-Mn alloy column jacket.

In such a steering column, it may potentially be possible to decrease the whole weight of the steering column assemble by the aluminum alloy column jacket which is lighter than the mild steel column jacket, decreasing the vehicle weight.

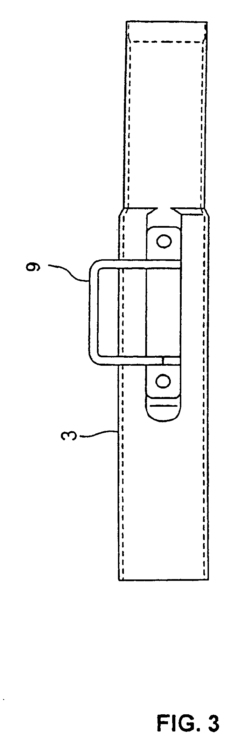

Hereunder is a description of a steering column assembled by a method according to an embodiment of the present invention which is different from the above. This steering column is an application example for an upper bracket for fixing to a body member. In FIG. 3, an upper bracket 9 for fixing to a body member is mounted on the column jacket 3.

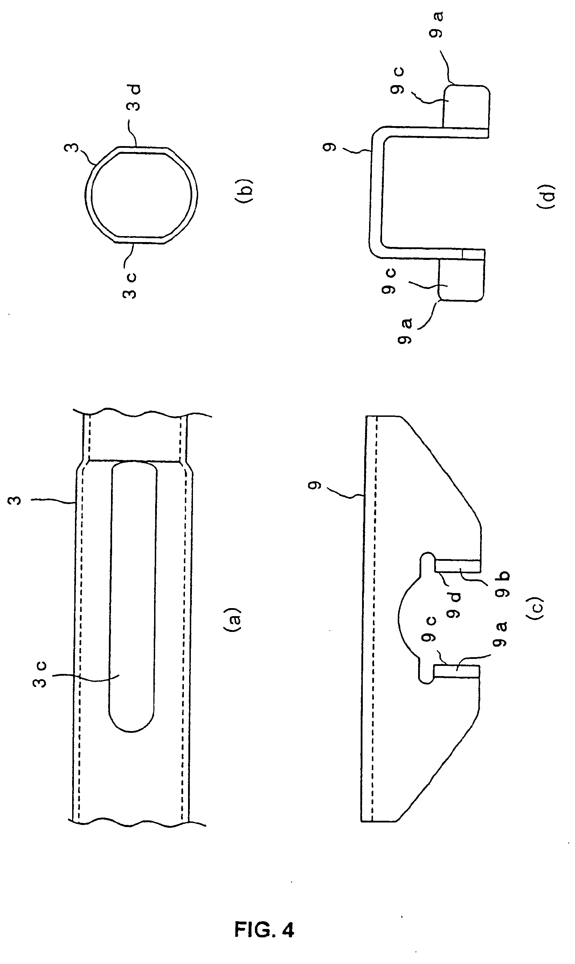

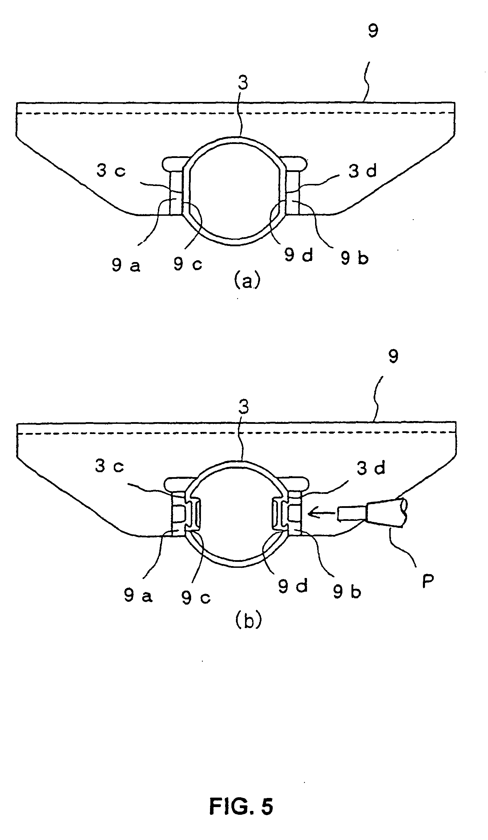

Hereunder is a description of a method of assembling a steering column according to an embodiment of the present invention, based on the schematic diagram shown in FIG. 4 and FIG. 5. An electric resistance welded mild steel tube or a drawn tube is cut in a predetermined length to form the cylindrical column jacket 3. As shown in FIG. 4(a) and (b), while supporting the inner surface by a die (not shown), the opposed outer surfaces are pressed by a punch (not shown) to form a pair of flat surfaces 3c and 3d back to back.

As shown in FIG. 4(c) and (d), a mild steel plate is prepared and press processed into the upper bracket 9 comprising a pair of joint projections 9a and 9b. The pair of projections 9a and 9b are symmetrically formed as two sets with respect to the center of the upper bracket, so as to protrude outwards. Inner surfaces 9c and 9d of the projections 9a and 9b are formed in a flat shape conforming to the flat surfaces 3c and 3d of the column jacket 3.

As shown in FIG. 5(a), the upper bracket 9 having the projections 9a and 9b is fitted to the column jacket 3 which was previously processed. In the present step, the inner surfaces 9c and 9d of the projections 9a and 9b are fitted along the flat surfaces 3c and 3d of the column jacket 3. After assembling, they are temporary fixed using a suitable clip so that the position of both members does not change accidentally.

As shown in FIG. 5(b), while supporting the inner surface of the column jacket 3 by a die (not shown), the outer surfaces of the projections 9a and 9b of the upper bracket 9 are crimped by applying a punch P. In the present step, these are crimped with the punch P which is pressed toward the center of the column jacket 3 so as not to deform the circular cross-section column jacket 3.

By the above procedure, the steering column having the upper bracket 9 mounted thereon (refer to FIG. 3) is obtained.

In the present embodiment of the present invention, particularly the positioning during the crimping process may potentially be well maintained by the flat surfaces 3c and 3d of the column jacket 3 and the flat inner surfaces 9c and 9d of the projections 9a and 9b of the upper bracket 9, and hence the joint strength may potentially be kept stable.

In the above embodiment of the present invention, it was explained that the cylindrical column jacket 3 was formed from a mild steel tube. However, the cylindrical column jacket may be formed from an Al-Mn alloy tube instead of a mild steel tube.

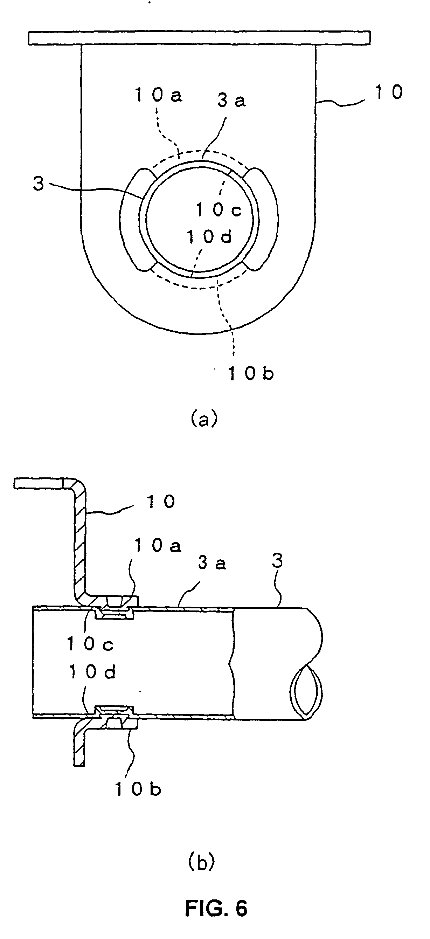

Hereunder is a description of an example, which is not according to the present invention, but which is given by way of background to the present invention, and which is different from the above. This example is an application example for a lower bracket for fixing to a body member. In FIG. 6(a) and (b), a lower bracket 10 for fixing to a body member is mounted on the column jacket 3. The lower bracket 10 comprises a pair of joint projections 10a and 10b. The pair of joint projections 10a and 10b are formed on the lower bracket 10 in a similar procedure to the method described in the above example and embodiment. That is, the pair of projections 10a and 10b are symmetrically formed with respect to the center of the lower bracket, so as to extend from the side face. Inner surfaces 10c and 10d of the projections 10a and 10b are formed in a circular arc shape conforming to the outer surface 3a of the column jacket 3.

The lower bracket 10 having the projections 10a and 10b is fitted to the column jacket 3 which was previously processed. In the present step, the inner surfaces 10c and 10d of the projections 10a and 10b are fitted along the outer surface 3a of the column jacket 3. After assembling, they are temporary fixed using a suitable clip so that the position of both members does not change accidentally.

While supporting the inner surface of the column jacket 3 by a die (not shown), the outer surfaces of the projections 10a and 10b of the lower bracket 10 are crimped by applying a punch ( not shown) .

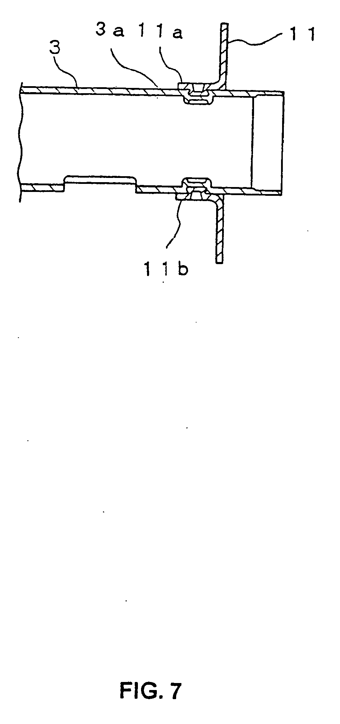

Hereunder is a description of an example, which is not according to the present invention, but which is given by way of background to the present invention, and which is different from the above. This example is an application example for a bracket for attaching a combination switch. In FIG. 7(a) and (b), a bracket 11 for attaching a combination switch is mounted on the column jacket 3. The bracket 11 comprises a pair of joint projections 11a and 11b. The pair of projections 11a and 11b are formed on the bracket 11 in a similar procedure to the method described in the above examples and embodiment. That is, the pair of projections 11a and 11b are symmetrically formed with respect to the center of the bracket, so as to protrude from the side face. Inner surfaces 11c and 11d of the projections 11a and 11b are formed in a circular arc shape conforming to the outer surface of the column jacket 3.

The bracket 11 having the projections 11a and 11b is fitted to the column jacket 3 which was previously processed. In the present step, the inner surfaces of the projections 11a and 11b are fitted along the outer surface of the column jacket 3. After assembling, they are temporary fixed using a suitable clip so that the position of both members does not change accidentally.

While supporting the inner surface of the column jacket 3 by a die (not shown), the outer surfaces of the projections 11a and 11b of the bracket 11 are crimped by applying a punch (not shown).

### INDUSTRIAL APPLICABILITY

As described above, the method according to an embodiment of the present invention, of assembling a steering column, is one where when fixing the bracket to the steering column, the bracket is fixed by crimping the joint projections which are integral with the bracket main body, which may potentially be effective in not increasing the number of steps and the number of components, and in keeping the manufacturing cost from increasing. Moreover, it may potentially be effective in that it is not necessary to strictly control the accuracy of the bracket, so that the bracket may potentially be manufactured at low cost.

## Claims

1. A method of assembling a steering column, comprising the steps of:
forming a cylindrical column jacket (3);
forming a pair of flat surfaces (3c, 3d) back to back on an outer surface of said cylindrical column jacket (3);
forming on a bracket (9) a pair of joint projections (9a, 9b) comprising flat inner surfaces (9c, 9d) conforming to the pair of flat surfaces (3c, 3d) of said column jacket (3);
temporarily fitting said joint projections (9a, 9b) of said bracket (9) along the flat surfaces (3c, 3d) of said column jacket (3); and
crimping said joint projections (9a, 9b) into the flat surfaces (3c, 3d) of said column jacket (3), wherein a punch (P) is applied with an inner surface of said column jacket (3) being supported by a die so that said joint projections (9a, 9b) are crimped with the punch (P) being pressed toward a center of said column jacket (3).

2. A method of assembling a steering column according to claim 1, wherein in forming said a pair of joint projections (9a, 9b), said joint projections (9a, 9b) are symmetrically formed with respect to the center of said bracket (9).

3. A method of assembling a steering column according to any preceding claim, wherein in forming said column jacket (3), a cylindrical column jacket is formed from a mild steel tube.

4. A method of assembling a steering column according to any preceding claim, wherein in forming said column jacket (3), a cylindrical column jacket is formed from an Al-Mn alloy tube.

5. A method of assembling steering column according to any preceding claim, wherein the joint projections (9a, 9b) are integral with a main body of the bracket (9).

## Patentansprüche

1. Verfahren zum Zusammenbau einer Lenksäule, umfassend die Schritte:
Ausbilden eines zylindrischen Säulenmantels (3);
Ausbilden eines Paares ebener Flächen (3c, 3d) Rücken zu Rücken auf einer äußeren Fläche des zylindrischen Säulenmantels (3);
Ausbilden eines Paares von zusammengefügten Fortsätzen (9a, 9b), welches ebene innere Flächen (9c, 9d) umfasst, die dem Paar ebener innerer Flächen (3c, 3d) des Säulenmantels (3), entsprechen auf einer Halterung (9) ;
vorübergehendes Befestigen der zusammengefügten Fortsätze (9a, 9b) der Halterung (9) entlang der ebenen Flächen (3c, 3d) des Säulenmantels (3); und
Eindrücken der zusammengefügten Fortsätze (9a, 9b) in die ebenen Flächen (3c, 3d) des Säulenmantels (3), wobei ein Stempel (P) angelegt wird, wobei eine innere Fläche des Säulenmantels (3) durch eine Matrize getragen wird, so dass die zusammengefügten Fortsätze (9a, 9b) eingedrückt werden, wobei der Stempel (P) in Richtung einer Mitte des Säulenmantels (3) gedrückt wird.

2. Verfahren zum Zusammenbau einer Lenksäule gemäß Anspruch 1, wobei beim Ausbilden dieses einen Paares von zusammengefügten Fortsätzen (9a, 9b) die zusammengefügten Fortsätze (9a, 9b) symmetrisch in Bezug auf die Mitte der Halterung (9) ausgebildet werden.

3. Verfahren zum Zusammenbau einer Lenksäule gemäß jedem vorangehenden Anspruch, wobei beim Ausbilden des Säulenmantels (3) ein zylindrischer Säulenmantel aus einem weichen unlegierten Stahlrohr ausgebildet wird.

4. Verfahren zum Zusammenbau einer Lenksäule gemäß jedem vorangehenden Anspruch, wobei beim Ausbilden des Säulenmantels (3) ein zylindrischer Säulenmantel aus einem Rohr aus Al-Mn Legierung ausgebildet wird.

5. Verfahren zum Zusammenbau einer Lenksäule gemäß jedem vorangehenden Anspruch, wobei die zusammengefügten Fortsätze (9a, 9b) einstückig mit einem Hauptkörper der Halterung (9) sind.

## Revendications

1. Procédé d'assemblage de colonne de direction, comprenant les étapes suivantes :
fabrication d'un chemisage (3) de colonne cylindrique ;
fabrication d'une paire de surfaces planes (3c, 3d) dos à dos sur une surface extérieure dudit chemisage (3) de colonne cylindrique ;
fabrication, sur un support (9), d'une paire de saillies jointives (9a, 9b) comprenant des surfaces intérieures planes (9c, 9d) correspondant à la paire de surfaces planes (3c, 3d) dudit chemisage (3) de colonne ;
loger temporairement lesdites saillies jointives (9a, 9b) dudit support (9) le long des surfaces planes (3c, 3d) dudit chemisage (3) de colonne ; et
enfoncer lesdites saillies jointives (9a, 9b) dans les surfaces planes (3c, 3d) dudit chemisage (3) de colonne, en plaçant un poinçon (P) alors qu'une surface intérieure dudit chemisage (3) de colonne est soutenue par une matrice, de sorte que lesdites saillies jointives (9a, 9b) sont enfoncées quand on comprime le poinçon (P) vers un centre dudit chemisage (3).

2. Procédé d'assemblage de colonne de direction selon la revendication 1, dans lequel lors de la fabrication de ladite paire de saillies jointives (9a, 9b), lesdites saillies jointives (9a, 9b) sont formées symétriquement par rapport au centre dudit support (9).

3. Procédé d'assemblage de colonne de direction selon l'une quelconque des revendications précédentes, dans lequel lors de la fabrication dudit chemisage (3) de colonne, un chemisage de colonne cylindrique est obtenu à partir d'un tube d'acier doux.

4. Procédé d'assemblage de colonne de direction selon l'une quelconque des revendications précédentes, dans lequel lors de la fabrication dudit chemisage (3) de colonne, un chemisage de colonne cylindrique est obtenu à partir d'un tube d'alliage aluminium manganèse (Al-Mn).

5. Procédé d'assemblage de colonne de direction selon l'une quelconque des revendications précédentes, dans lequel les saillies jointives (9a, 9b) font partie intégrante d'un corps principal du support (9).
